# EUROPÄISCHE PATENTSCHRIFT

(11) **EP 2 482 057 B1**
(45) Veröffentlichungstag und Bekanntmachung des Hinweises auf die Patenterteilung: **20.03.2013**
(21) Anmeldenummer: 11152377.5
(22) Anmeldetag: 27.01.2011
(51) Int. Cl.: G01N 21/27, G01N 21/31

(54) **Gasanalysator zur Messung des Quecksilbergehalts eines Gases und dessen Kalibrierungsverfahren**
Gas analyser for measuring the mercury content of a gas and calibration method
Analyseur de gaz destiné à la mesure de la teneur en mercure d'un gaz et procédé de calibration

(43) Veröffentlichungstag der Anmeldung: 01.08.2012
(73) Patentinhaber: SICK AG, 79183 Waldkirch (DE)
(72) Erfinder: Disch, Rolf, 79356 Eichstetten (DE)
(74) Vertreter: Ludewigt, Christoph

(56) Entgegenhaltungen:
- DE-A1- 4 407 664
- GB-A- 818 079
- US-A1- 2005 168 737
- GANEYEV A A ET AL: "New Zeeman atomic absorption spectroscopy approach for mercury isotope analysis", SPECTROCHIMICA ACTA. PART B: ATOMIC SPECTROSCOPY, NEW YORK, NY, US, US, Bd. 47, Nr. 11, 1. Oktober 1992 (1992-10-01), Seiten 1325-1338, XP026567167, ISSN: 0584-8547, DOI: DOI:10.1016/0584-8547(92)80122-W [gefunden am 1992-10-01]
- MARCUS OLOFSSON ET AL: "Application of Relaxed Eddy Accumulation Technique to Quantify Hg0 Fluxes Over Modified Soil Surfaces", WATER, AIR, AND SOIL POLLUTION, KLUWER ACADEMIC PUBLISHERS, DO, Bd. 167, Nr. 1-4, 1. Oktober 2005 (2005-10-01), Seiten 331-352, XP019271157, ISSN: 1573-2932
- H KOIZUMI: "An application of the Zeeman effect to atomic absorption spectrometry: a new method for background correction", SPECTROCHIMICA ACTA PART B: ATOMIC SPECTROSCOPY, Bd. 31, Nr. 5, 1. Januar 1976 (1976-01-01) , Seiten 237-255, XP55001348, ISSN: 0584-8547, DOI: 10.1016/0584-8547(76)80024-9

## Beschreibung

Die Erfindung betrifft einen Gasanalysator zur Messung des Quecksilbergehalts eines Gases nach dem Oberbegriff des Anspruchs 1 sowie ein Verfahren zum Kalibrieren des Gasanalysators.

Es sind gattungsgemäße Vorrichtungen zur Messung der Quecksilberkonzentration in einem Gas bekannt. Diese Vorrichtungen weisen eine Quecksilberlampe als Lichtquelle auf, von der die Spektrallinien isotopenreinen Quecksilbers entlang einer optischen Achse ausgesandt werden. Die Lichtquelle befindet sich in einem Magnetfeld, das in Richtung der optischen Achse ausgerichtet ist, so dass die σ+, σ - polarisierten Zeeman Komponenten der Spektrallinie erzeugt werden (longitudinaler Zeeman Effekt). Das so erzeugte Licht wird durch eine Absorptionszelle geführt, in der Absorption an dem zu messenden Hg enthaltenden Gas erfolgt. Die eine der beiden Komponenten ist durch die magnetische Aufspaltung so weit verschoben, dass sie nicht von natürlichem Hg absorbiert werden kann, während die andere Komponente auch im verschobenen Zustand in der Absorption liegt. Durch Vergleich dieser beiden Komponenten nach Durchlaufen der Absorptionszelle kann die Absorption und damit der Hg Gehalt bestimmt werden. Um die Absorption der beiden Komponenten getrennt untersuchen zu können, werden sie in einer optischen Trennvorrichtung getrennt.

Die Messfähigkeit eines Gasmessgerätes allgemein, bzw. eines solchen Quecksilbermessgerätes im Besonderen, muss mittels zyklischen Überprüfungsmessungen gewährleistet werden.

Zum Kalibrieren ist es deshalb bekannt, Messküvetten einzusetzen, die mit der zu messenden Komponente in bekannter Konzentration gespült werden, was in einem extraktiven System mit beliebig wählbarer Konzentration (insbesondere im Bereich des Messbereichs des Gerätes) und Zykluszeiten realisierbar ist.

Nachteile dieser Spülmethode sind die z.T. langen Kalibrier/Prüfzeiten, da das Gas über das Entnahmesystem aufgegeben werden muss. Ist die Messkomponente Quecksilber, so ist die Realisierung einer Prüfküvette mit Quecksilber selbst schwierig - insbesondere bei kleinen zu messenden Konzentrationen. Eine Möglichkeit wäre, den Dampfdruck über einem Tröpfchen Quecksilber sehr genau einzustellen. Das ist aber sehr aufwändig, denn um beispielsweise ein Quecksilbersignal zu erhalten, was einer Konzentration von 10µg/m³ in einer 30cm-Küvette entspricht, müsste die Prüfküvette eine Dicke von nur 0.04mm aufweisen und zudem sehr genau auf 45°C thermostatisiert werden. Will man die Konzentration über den Dampfdruck auf 1% genau einstellen, wäre eine Temperaturgenauigkeit von ≤0.15°C erforderlich. Beides ist sehr schwierig bis gar nicht zu realisieren.

Eine andere bekannte Kalibriermöglichkeit ist, eine verschlossene, gasgefüllte Küvette mit bekannter Quecksilberkonzentration in den Messpfad einzuschwenken. Die Temperaturabhängigkeit ist hier deutlich geringer, da deren Einfluss nur über die Temperatur- und Druckverbreiterungseigenschaften gegeben ist, aber nicht mehr über eine Änderung der Quecksilberkonzentration. Das mit der Prüfküvette zu erreichende Signal sollte dem Signal über dem Messpfad entsprechen. Eine solche Kalibration kann in sehr kurzen Zeiten durchgeführt werden. Allerdings bleibt die Konzentration auf Grund von Adsorption des Quecksilbers an der Quarzoberfläche der Prüfküvette nicht stabil.

Aus dem Artikel von Ganeyev et al: "New Zeeman atomic absorption spectroscopy approach for mercury isotope analysis" aus Spectrochimica Acta, Vol 47B, No. 11, pp 1325-1338, 1992 ist ein Verfahren bekannt, bei dem mit Hilfe des direkten und des inversen Zeeman Effekts eine Isotopenanalyse vorgenommen wird. Eine Kalibrierung erfolgt dabei mit einer ²⁰²Hg enthaltenden Probe.

In dem Artikel von Koizumi et al: "An application of the Zeeman effect to atomic absorption spectrometry: a new method for background correction" aus Spectrochimica Acta, Vol 31 B, No. 5, pp 237-255, 1976 ist eine Vorrichtung und Verfahren beschrieben, bei dem Atome mit Hilfe des Zeeman Effekts untersucht werden und bei dem ein Untergund, der durch andere Molküle, wie z.B. Benzol, berücksichtigt wer den kann.

Ausgehend von diesem Stand der Technik ist es Aufgabe der Erfindung, einen verbesserten Gasanalysator zur Messung des Quecksilbergehalts eines Gases bereitzustellen, der in einfacher Weise kalibrierbar ist, sowie ein entsprechendes verbessertes Kalibrierverfahren bereitzustellen.

Diese Aufgabe wird gelöst durch einen Gasanalysator mit den Merkmalen des Anspruchs 1, sowie ein Verfahren mit den Merkmalen des Anspruchs 7.

Der Erfindungsgemäße Gasanalysator zur Messung des Quecksilbergehalts eines Gases umfasst eine Hg-Lichtquelle, die Sendelicht mit Wellenlängen wenigstens einer Spektrallinie des Quecksilbers aussendet, eine Messzelle mit Zu- und Abflüssen für das zu untersuchende Gas, einen Lichtempfänger, eine Auswerteeinheit, die ausgebildet ist aus der Absorption in der Messzelle die Quecksilberkonzentration zu bestimmen und eine in den Strahlengang einbringbare Prüfküvette zur Überprüfung der Funktionsfähigkeit, wobei die Prüfküvette als Prüfgas Benzol enthält.

Benzol (C6H6) ist ein Stoff, welcher in dem relevanten Spektralbereich des Hg in einer breiten Absorptionsbande absorbiert, jedoch in der zu messenden Gasmatrix an der Messstelle nicht oder in Konzentrationen vorkommt, welche die Messung nicht beeinträchtigen. Die Prüfküvette selbst ist eine Standard Quarzküvette, welche nach der Befüllung abgeschmolzen und somit dauerhaft versiegelt wird.

Benzol kann in sehr großen Konzentrationen in die Prüfküvette eingefüllt werden, damit Wandreaktionen des Benzols vernachlässigbar sind. Die Konzentration in der Küvette ist über lange Zeit stabil, das Messsignal ist deutlich weniger temperaturempfindlich als bei einer Quecksilberküvette.

Mit Vorteil ist Benzol als Prüfgas handelsüblich zu erwerben.

Die Höhe dieses Kalibriersignals kann einfach über die Konzentration des Benzols oder die Länge der Prüfküvette eingestellt werden.

Gegenüber einer Spülung der Messküvette über beheizte Gasleitungen ist die erfindungsgemäße Lösung deutlich weniger zeitraubend, was die Verfügbarkeit des Messgerätes erhöht.

Typischerweise ist die Schichtdicke der Prüfküvette 10 bis 20mm, der Durchmesser 20mm.

In Weiterbildung der Erfindung beträgt die Konzentration des Benzols etwa 1%, die optische Lichtweglänge in der Prüfküvette etwa 2cm und der Druck in der Prüfküvette etwa 1000mbar. Wenn dann die Temperatur in der Prüfküvette etwa Zimmertemperatur beträgt, liefert die Prüfküvette ein Messsignal von etwa 15µg/m³. Die Höhe dieses Signals kann in einfacher Weise über die Konzentration des Füllgases eingestellt werden.

Vorteilhafterweise sind eine Mehrzahl von untereinander verbundenen Prüfküvetten mit jeweils unterschiedlicher optischer Weglänge vorgesehen. Dadurch lässt sich sehr schnell auch eine Linearitätsprüfung durchführen. Unabhängig von der eingefüllten Konzentration müssen sich die Messsignale der einzelnen Prüfküvetten zueinander verhalten wie ihre entsprechenden optischen Weglängen.

Dabei sind vorzugsweise wechselnde Kombinationen von mindestens drei Prüfküvetten mit unterschiedlichen Weglängen vorgesehen. Damit in allen Prüfküvetten die gleiche Konzentration vorliegt und eine aussagekräftige Linearitätsprüfung erfolgen kann, sind die Prüfküvetten untereinander verbundenen.

Das Kalibrierverfahren selbst umfasst die Schritte:
- Erzeugen von Licht mit Wellenlängen wenigstens einer Hg Spektrallinie durch eine Hg-Lichtquelle,
- Bereitstellen einer Prüfküvette mit Benzol bekannter Konzentration als Prüfgas und damit bekannten Kalibrierwerten der Prüfküvette bei den Wellenlängen der Hg-Spektrallinie,
- Einsetzen der Prüfküvette in den Strahlengang,
- Kalibirieren des Gasanalysators auf die bekannten Kalibrierwerte.

Zum Beispiel können die Kalibrierwerte wie folgt bestimmt werden: Bei Inbetriebnahme des Gasanalysators wird zunächst mittels Aufgabe einer bekannten Quecksilberkonzentration in die Messküvette der Gasanalysator erstmalig kalibriert. Dann wird ein Absorptionsmesswert für die Prüfküvette ermittelt und als Kalibrierwert gespeichert und bei allen folgenden Kalibrierungen mit der Prüfküvette wird der aktuell erhaltene Messwert mit dem Kalibrierwert verglichen und so der Gasanalysator im Betrieb kalibriert.

Dabei können wie bereits erwähnt verschiedene untereinander verbundene Prüfküvetten mit jeweils unterschiedlichen optischen Weglängen eingesetzt werden.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines Gasanalysators zur Messung des Quecksilbergehalts eines Gases;
- Fig. 2: ein Quecksilberspektrum einer Lichtquelle des Gasanalysators und das Absorptionsspektrum;
- Fig. 3: eine schematische Darstellung eines Satzes von Prüfküvetten;
- Fig. 4: ein Ausschnitt aus dem Absorptionsspektrum von Benzol.

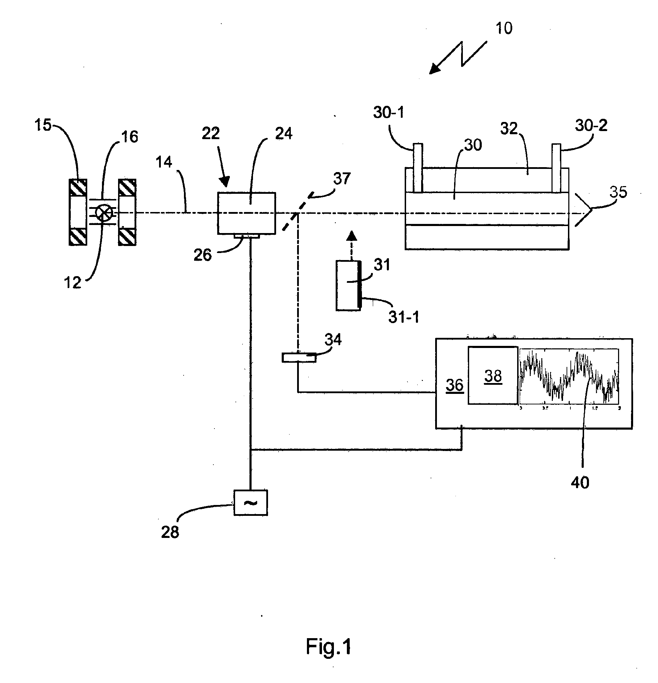

Eine Vorrichtung 10 zur Messung des Quecksilbergehalts in einem Gas, wie sie schematisch in Fig. 1 dargestellt ist, weist eine Lichtquelle 12, insbesondere eine elektrodenlose Gasentladungslampe, zur Aussendung von Quecksilberspektrallinien entlang einer optischen Achse 14 auf.

Die Lichtquelle 12 enthält isotopenreines ¹⁹⁸Hg und befindet sich in einem möglichst homogenen Magnetfeld 16, das von einem Magneten 15 erzeugt wird und das am Ort der Lichterzeugung parallel zur optischen Achse ausgerichtet ist. Dadurch werden aufgrund des longitudinalen Zeeman-Effektes die σ+ und σ- polarisierten Zeeman Komponenten λ1 bzw. λ2 der Spektrallinie erzeugt.

Damit die Aufspaltung der Spektrallinien groß genug ist und die Spektrallinien scharf bleiben, also an jedem Ort in der Lampe um den gleichen Betrag spektral verschoben werden, muss ein ausreichend starkes und homogenes Magnetfeld erzeugt werden.

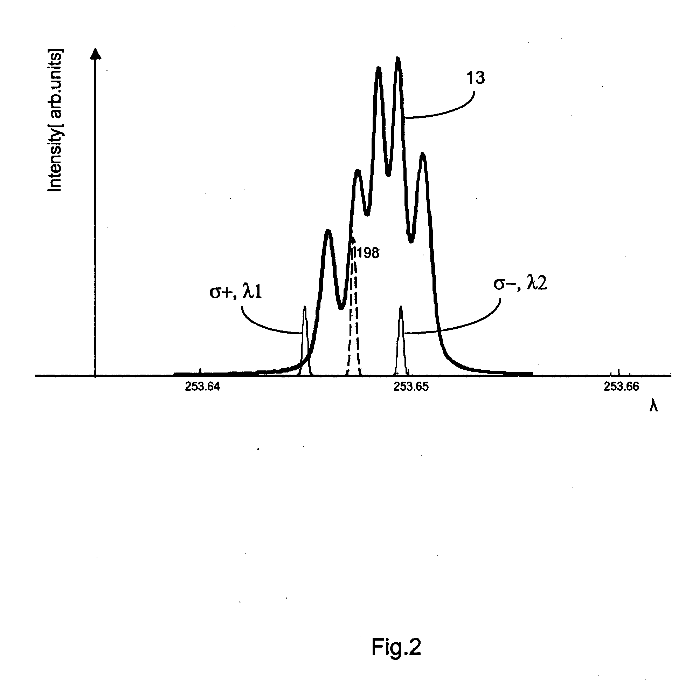

Fig. 2 zeigt diese von der Lichtquelle 12 erzeugte Quecksilberspektrallinien zusammen mit dem Absorptionsspektrum 13 des natürlichen Quecksilbers, wie es in einem zu messenden Gas vorkommt. Das Magnetfeld ist am Ort der Gasentladung so stark, dass die σ+ Komponente λ1 aus der Absorption herausgeschoben ist, während die σ- Komponente λ2 noch in der Absorption liegt. Typischerweise beträgt das Magnetfeld dafür etwa 0.7 Tesla.

Wie weiter unten erläutert wird, ist die ausreichende Trennung deswegen wichtig, weil λ2 letztendlich die Messgröße liefert, da die σ- Komponente absorbiert wird und die σ+ Komponente λ1 eine Referenzgröße bildet, da sie nicht vom Quecksilber in der Absorptionszelle absorbiert wird.

Das Licht durchläuft dann einen photoelastischen Modulator 24, in dem aufgrund der doppelbrechenden Eigenschaften des Modulators 24 die entgegengesetzt zirkular polarisierten σ Komponenten unterschiedlich beeinflusst werden. Diese unterschiedliche Beeinflussung erfolgt im Rhythmus einer angelegten Wechselspannung, die durch eine Spannungsversorgung 28 bereitgestellt wird. Dadurch wird zu bestimmten Zeiten nur die σ+ Komponente durchgelassen und zu bestimmten anderen Zeiten nur die σ- Komponente. Somit erfolgt mit Hilfe des photoelastischen Modulators 24 eine zeitliche Auftrennung von σ+ und σ- Komponente.

Danach durchläuft das Licht eine Messzelle 30 mit der darin enthaltenen, zu messenden Quecksilberverunreinigung. Die Messzelle 30 weist Zu- und Abflüsse 30-1 und 30-2 auf für das zu untersuchende Gas, sowie ein Heizung 32, um das Gas zu heizen, damit das Quecksilber möglichst in atomarem Zustand vorliegt. Die noch innerhalb des Absorptionsspektrums befindliche σ- Komponente erfährt in der Messzelle 30 eine Absorption an den Quecksilberatomen, wohingegen die σ+ Komponente keine Absorption aufgrund der Energieverschiebung aus der Absorption heraus erfährt, so dass das Licht dieser Linie als Referenzlicht dienen kann. Das Licht wird an einem Retroreflektor 35 reflektiert und durchläuft die Messzelle ein zweites Mal.

Schließlich wird das Licht mittels eines Strahlteilers 37 ausgekoppelt und auf dem Lichtempfänger 34 empfangen und einem Lock-In Verstärker 38 zugeführt, der mit der dem photoelastischen Modulator 24 zugeführten Wechselspannung getriggert ist. Im Ergebnis wird dann über den Lock-In Verstärker ein Signal erhalten, wie dies qualitativ in Fig. 1 mit der Bezugsziffer 40 gezeigt ist. Der Lichtempfänger 34 empfängt also abwechselnd Referenzlicht und den nicht absorbierten Teil des Messlichts mit der Frequenz der Modulatorsteuerspannung, so dass die Differenz hiervon, also die Amplitude der Kurve 40, ein Maß für die Absorption in der Messzelle 30 ist, und damit ein Maß für die Quecksilberkonzentration, so dass aus diesem Signal sich die Konzentration des Quecksilbers in dem zu untersuchenden Gas bestimmen lässt.

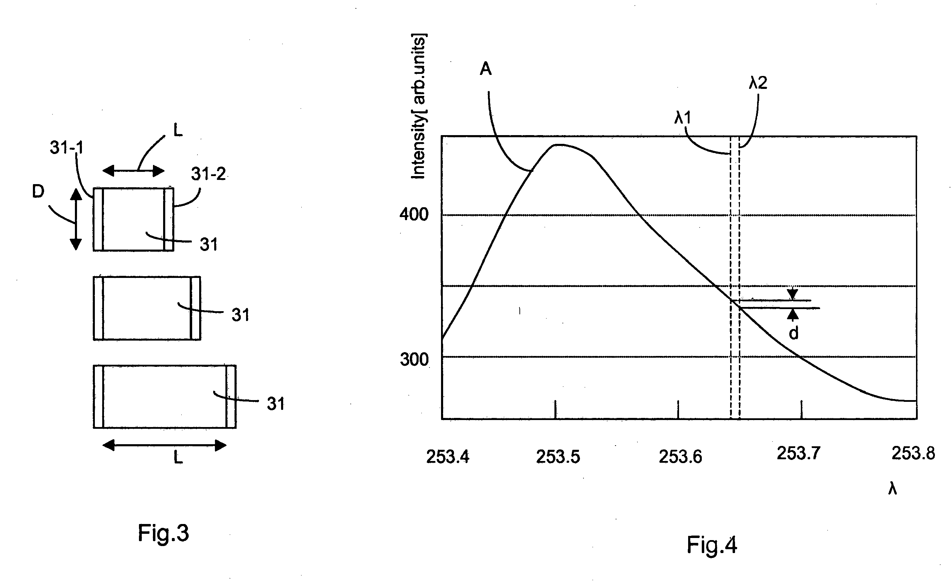

Zur Kalibrierung des Gasanalysators 10 dienen die in Fig. 3 schematisch dargestellten Prüfküvetten 31. Prinzipiell ist eine einzige Prüfküvette 31 zur Kalibrierung ausreichend.

Die Prüfküvette 31 besteht aus einem Quarzglas und ist gasdicht verschlossen und mit Benzol einer Konzentration von etwa 1% und 1000 mbar bei Zimmertemperatur gefüllt. Für den Lichteintritt und Lichtaustritt sind Fenster 31-1 und 31-2 vorgesehen. Die optische Weglänge L beträgt vorzugsweise zwischen 10 und 20 mm, wobei in Fig. 3 ein Satz Prüfküvetten 31 dargestellt ist, mit jeweils unterschiedlichen optischen Weglängen L. Der Durchmesser der Prüfküvetten 31 beträgt typischerweise 20 mm.

Zur Kalibrierung des Gasanalysators 10 ist eine solche Prüfküvette 31 in den Strahlengang einbringbar, wobei in dem Ausführungsbeispiel nach Fig. 1 die Prüfküvette 31 einen Spiegel 31-3 aufweist, so dass das Licht nicht die Messzelle 30 durchläuft und auf den Empfänger 34 ausgekoppelt werden kann. Prinzipiell könnte die Prüfküvette auch anstelle der Messküvette 30 oder zusätzlich zur Messküvette, wobei diese dann mit Nullgas, z.B. Stickstoff gespült wird, eingesetzt werden. Dann braucht die Prüfküvette 31 die in Fig. 3 gezeigten Fenster.

Fig. 4 zeigt das Absorptionsspektrum von Benzol im relevanten Wellenlängenbereich. Zwischen 230 und 270 nm hat Benzol eine schwache Absorptionsbande A. Zusätzlich eingezeichnet sind die Lagen λ1 und λ2 der Zeeman-Komponenten der Absorptionslinie von ¹⁹⁸Hg. Die Differenz d der Intensitäten des Kalibrierungsmesssignals an diesen beiden Lagen ist bei konstanter Temperatur und Druck des Benzols proportional der in der Prüfküvette vorhandenen Konzentration, so dass der Gasanalysator mit den Messungen der Prüfküvette kalibriert werden kann. Die Temperatur der Prüfküvette liegt in der Regel zwischen Zimmertemperatur und 50°C.

Das Absorptionsspektrum des Benzols muss nicht qualitativ (absolute Absorptionsstärke als Funktion der Wellenlänge) bekannt sein. Wichtig ist, dass es vorhanden und zeitlich konstant ist. Eine "Kalibrierung" des Gasanalysators kann dann beispielsweise nach folgendem Prinzip erfolgen. Zunächst wird der Gasanalysator selbst zu Beginn, also z.B. bei der Inbetriebnahme, mittels Aufgabe einer bekannten Quecksilberkonzentration in die Messküvette, kalibriert. Anschließend wird die Prüfküvette eingeschwenkt und deren Messwert ab diesem Zeitpunkt als Kalibrierwert festgehalten. Bei allen folgenden Kalibrierungen bzw. Überprüfungen wird die Prüfküvette eingeschwenkt und der erhaltene Messwert mit dem Kalibrierwert verglichen und ggf. die Empfindlichkeit des Gasanalysators angepasst.

Für eine Linearitätsüberprüfung des Gasanalysators 10 werden verschiedene Prüfküvetten 31 mit unterschiedlichen Längen in den Strahlengang eingebracht und überprüft, ob die Messsignale den optischen Weglängen entsprechen. Damit bei dieser Überprüfung immer die gleiche Konzentration Benzol in den Prüfküvetten vorhanden ist und einen Vergleich der Messungen bei verschiedenen Weglängen zulässt, sind die Prüfküvetten 31 vorzugsweise miteinander verbunden.

## Patentansprüche

1. Gasanalysator zur Messung des Quecksilbergehalts eines Gases mit einer Hg-Lichtquelle (12), die Sendelicht mit Wellenlängen wenigstens einer Spektrallinie des Quecksilbers aussendet, einer Messzelle (30) mit Zu- und Abflüssen für das zu untersuchende Gas, einem Lichtempfänger (34), einer Auswerteeinheit (36), die ausgebildet ist aus der Absorption in der Messzelle (30) die Quecksilberkonzentration zu bestimmen und mit einer in den Strahlengang einbringbaren Prüfküvette (31) zur Überprüfung der Funktionsfähigkeit, **dadurch gekennzeichnet, dass** die Prüfküvette (31) als Prüfgas Benzol enthält.

2. Gasanalysator nach Anspruch 1, **dadurch gekennzeichnet, dass** die Konzentration des Benzols etwa 1 % beträgt.

3. Gasanalysator nach Anspruch 1 oder 2, **dadurch gekennzeichnet, dass** die optische Lichtweglänge in der Prüfküvette (31) etwa 2cm beträgt.

4. Gasanalysator nach einem der vorhergehenden Ansprüche, **dadurch gekennzeichnet, dass** der Druck in der Prüfküvette (31) etwa 1000mbar beträgt.

5. Gasanalysator nach einem der vorhergehenden Ansprüche, **dadurch gekennzeichnet, dass** die Temperatur in der Prüfküvette (31) etwa zwischen Zimmertemperatur und 50°C liegt.

6. Gasanalysator nach einem der vorhergehenden Ansprüche, **dadurch gekennzeichnet, dass** eine Mehrzahl von untereinander verbundenen Prüfküvetten (31) mit jeweils unterschiedlicher optischer Weglänge (L) vorgesehen ist.

7. Verfahren zum Kalibrieren eines Quecksilbergasanalysators, mit den Schritten:
- Erzeugen von Licht mit Wellenlängen wenigstens einer Hg Spektrallinie durch eine Hg-Lichtquelle,
- Bereitstellen einer Prüfküvette (31) mit Benzol bekannter Konzentration als Prüfgas und damit bekannten Kalibrierwerten der Prüfküvette (31) bei den Wellenlängen der Hg-Spektrallinie,
- Einsetzen der Prüfküvette (31) in den Strahlengang,
- Kalibirieren des Gasanalysators (10) auf die bekannten Kalibrierwerte.

8. Verfahren nach Anspruch 7, **dadurch gekennzeichnet, dass** bei Inbetriebnahme des Gasanalysators (10) zunächst mittels Aufgabe einer bekannten Quecksilberkonzentration in die Messküvette (30) der Gasanalysator (10) erstmalig kalibriert wird und dann ein Messwert für die Prüfküvette (31) ermittelt und als Kalibrierwert gespeichert wird und bei allen folgenden Kalibrierungen mit der Prüfküvette (31) der aktuell erhaltene Messwert mit dem Kalibrierwert verglichen und so der Gasanalysator (10) im Betrieb kalibriert wird.

9. Verfahren nach Anspruch 7 oder 8, **dadurch gekennzeichnet, dass** verschiedene Prüfküvetten (31) mit verschiedenen optischen Weglängen (L) eingesetzt werden.

## Claims

1. A gas analyzer for measuring the mercury content of a gas having an Hg light source (12) which transmits transmitted light having wavelengths of at least one spectral line of the mercury, a measuring cell (30) having inflows and outflows for the gas to be measured, a light receiver (34), an evaluation unit (36) which is designed to determine the mercury concentration from the absorption in the measuring cell (30) and a test cuvette (31) which can be introduced into the beam path for checking the operability, **characterized in that** the test cuvette (31) contains benzol as a test gas.

2. A gas analyzer in accordance with claim 1, **characterized in that** the concentration of the benzol amounts to approximately 1 %.

3. A gas analyzer in accordance with claim 1 or 2, **characterized in that** the optical light path length in the test cuvette (31) amounts to approximately 2 cm.

4. A gas analyzer in accordance with any preceding claim, **characterized in that** the pressure in the test cuvette (31) amounts to approximately 1000 mbar.

5. A gas analyzer in accordance with any preceding claim, **characterized in that** the temperature in the test cuvette (31) lies approximately between room temperature and 50 °C.

6. A gas analyzer in accordance with any preceding claim, **characterized in that** a plurality of mutually connected test cuvettes (31) each having different optical path lengths (L) is provided.

7. A method of calibrating a mercury gas analyzer, comprising the steps:
- generating light by a mercury light source having wavelengths of at least one Hg spectral line;
- providing a test cuvette (31) with benzol of a known concentration as a test gas and thus with known calibration values of the test cuvette (31) at the wavelengths of the Hg spectral line;
- inserting the test cuvette (31) into the beam path; and
- calibrating the gas analyzer (10) to the known calibration values.

8. A method in accordance with claim 7, **characterized in that** on the putting into operation of the gas analyzer (10), the gas analyzer (10) is first calibrated for the first time by means of charging a known mercury concentration into the measuring cuvette (30) and then a measured value for the test cuvette (31) is determined and is saved as a calibration value and the currently obtained measured value is compared with the calibration value in all following calibrations with the test cuvette (31) and the gas analyzer (10) is thus calibrated in operation.

9. A method in accordance with claim 7 or 8, **characterized in that** different test cuvettes (31) having different optical wavelengths (L) are used.

## Revendications

1. Analyseur de gaz pour la mesure de la teneur de mercure d'un gaz avec une source de lumière de mercure (12) qui transmet de la lumière transmise de longueurs d'onde ayant au moins une raie spectrale du mercure, une cellule de mesure (30) avec des entrées et des sorties pour le gaz à mesurer, un récepteur de lumière (34), une unité d'évaluation (36) qui est conçue pour déterminer la concentration de mercure de l'absorption dans la cellule de mesure (30) et une cuvette d'essai (31) qui peut être introduite dans le trajet du faisceau pour le contrôle de la capacité de fonctionnement, **caractérisé en ce que** la cuvette d'essai (31) contient du benzol en tant qu'un gaz d'essai.

2. Analyseur de gaz selon la revendication 1, **caractérisé en ce que** la concentration de benzol est d'environ 1 %.

3. Analyseur de gaz selon la revendication 1 ou 2, **caractérisé en ce que** la longueur de chemin optique de lumière dans la cuvette d'essai (31) s'élève à environ 2 cm.

4. Analyseur de gaz selon l'une des revendications précédentes, **caractérisé en ce que** la pression dans la cuvette d'essai (31) s'élève à environ 1000 mbar.

5. Analyseur de gaz selon l'une des revendications précédentes, **caractérisé en ce que** la température dans la cuvette d'essai (31) se situe à peu près entre la température ambiante et 50°C.

6. Analyseur de gaz selon l'une des revendications précédentes, **caractérisé en ce qu'**une pluralité de cuvettes d'essai (31) reliées entre eux ayant chacune différentes longueurs de chemin optique (L) est prévue.

7. Procédé de calibrage d'un analyseur de gaz du mercure, comprenant les étapes consistants à:
- Produire de la lumière par une source de lumière de mercure avec des longueurs d'onde d'au moins d'une raie spectrale Hg;
- Fourniture d'une cuvette d'essai (31) avec du benzol d'une concentration connue en tant qu'un gaz d'essai, et donc des valeurs de calibrage connues de la cuvette d'essai (31) aux longueurs d'onde des raies spectrales de mercure;
- Insertion de la cuvette d'essai (31) dans le trajet du faisceau, et
- Calibrer l'analyseur de gaz (10) aux valeurs de calibrage connues.

8. Procédé selon la revendication 7, **caractérisé en ce que** à la mise en service de l'analyseur de gaz (10), l'analyseur de gaz (10) est d'abord calibré pour la première fois par ajouter une concentration de mercure connue dans la cuvette de mesure (30) et ensuite une valeur de mesure pour la cuvette d'essai (31) est déterminée et est enregistrée comme une valeur de calibrage et la valeur mesurée obtenue actuellement est comparée à la valeur de calibrage dans tous les calibrages suivants avec la cuvette d'essai (31) et l'analyseur de gaz (10) est ainsi calibré en service.

9. Procédé selon la revendication 7 ou 8, **caractérisé en ce que** des cuvettes d'essai différentes (31) avec différentes longueurs de chemin optique (L) sont utilisées.
